# EUROPÄISCHE PATENTSCHRIFT

(11) **EP 1 990 115 B1**
(45) Veröffentlichungstag und Bekanntmachung des Hinweises auf die Patenterteilung: **19.10.2011**
(21) Anmeldenummer: 08008745.5
(22) Anmeldetag: 09.05.2008
(51) Int. Cl.: B23D 45/10, B23D 45/20, B23D 47/08

(54) **Kappvorrichtung**
Trimming device
Dispositif de coupe

(30) Priorität: 11.05.2007 DE 102007022698
(43) Veröffentlichungstag der Anmeldung: 12.11.2008
(73) Patentinhaber: Reinhardt, Christof, 78628 Rottweil-Neukirch (DE)
(72) Erfinder: Reinhardt, Franz, 78628 Rottweil-Neukirch (DE)
(74) Vertreter: Neunert, Peter Andreas

(56) Entgegenhaltungen:
- WO-A-03/092942
- DE-A1- 3 020 321
- DE-C- 899 705
- JP-A- 4 261 709
- US-A- 2 682 307
- US-A1- 2003 209 116

## Beschreibung

Die Erfindung betrifft eine Kappvorrichtung gemäß dem Oberbegriff des Anspruchs 1. Eine solche Vorrichtung ist aus US 2003/029116 A1 bekannt.

Eine derartige Kappvorrichtung, wie sie beispielsweise aus der WO 03/092943 A1 oder der DE 697 16 757 T2 bekannt geworden ist, weist eine Fördereinrichtung auf, mit der ein Werkstück, beispielsweise ein Langholz, zugeführt wird. Weiterhin ist eine Trenneinrichtung zum Schneiden des Holzes an vorgegebenen Stellen vorgesehen. Diese weist als Trennwerkzeuge Sägeblätter auf, die quer zur Längsrichtung des zu sägenden Holzes angeordnet sind. Die Trenneinrichtung weist nun die Besonderheit auf, dass die Sägeblätter auf einem drehbaren Rahmen und in Längsrichtung des zu sägenden Holzes verfahrbar angeordnet sind. Durch eine Steuereinrichtung ist es möglich, die Sägeblätter mit der Vorschubgeschwindigkeit des zu sägenden Langholzes zu synchronisieren, so dass das Langholz während des Durchlaufs durch die Kappvorrichtung ohne Unterbrechung des Vorschubs durchtrennt werden kann. Der drehbare Rahmen ermöglicht es darüber hinaus, einen weiteren Trennschnitt mit dem zweiten Sägeblatt auszuführen, während das erste Sägeblatt entgegen der Vorschubrichtung in seine Ausgangsposition zurückkehrt.

Mit Hilfe dieser Vorrichtung ist es möglich, Langholz in Stücke mit einer festgelegten Länge in einem kontinuierlichen Vorgang zu zerschneiden.

Nachteilig ist hierbei, dass im Falle von Fehlstellen, wie beispielsweise von Astlöchern, wie sie typisch für derartige Naturprodukte sind, das betroffene Stück vollständig verworfen werden oder einer niedrigeren Qualitätsstufe zugeordnet werden muss, auch wenn nur ein verhältnismäßig kleiner Abschnitt hiervon betroffen ist. Damit einhergehend müssen Abstriche in der Ausbeute oder in der Wertschöpfung hingenommen werden.

Es sind deshalb Konzepte entwickelt worden, diesen Nachteil auszumerzen. So ist der Broschüre "Vario-Line" der Firma Christof Reinhardt Maschinenbau ein Anlagenkonzept zu entnehmen, bei dem Werkstücke mit Markierungen versehen werden, die Fehler und Qualitätskriterien kennzeichnen. Die Markierungen werden anschließend in einer Steuereinheit erfasst und unter Berücksichtigung von aktuell anstehenden Zuschnittsvorgaben ausgewertet. Die Trennschnitte werden dann automatisch individuell für jedes Werkstück so festgelegt, dass möglichst wenig Verschnitt und Abfall anfällt. Je nach Ausbaustufe der Anlage kann zusätzlich eine Optimierung hinsichtlich der Qualitätsabstufung vorgenommen werden.

Nachteilig bei diesem Anlagenkonzept ist jedoch, dass die Säge stationär angeordnet ist, so dass das Werkstück für die Dauer des Trennvorgangs angehalten werden muss. Ein kontinuierlicher Sägevorgang ist damit nicht realisierbar.

Der Erfindung liegt die Aufgabe zugrunde zu verhindern, dass das Trennwerkzeug die Fördereinrichtung beschädigt.

Diese Aufgabe wird erfindungsgemäß durch die Merkmale des Anspruchs 1 gelöst. Weitere vorteilhafte Ausführungsformen sind den abhängigen Ansprüchen 2 bis 9 zu entnehmen.

Zwei Trennvorrichtungen sind vorgesehen, die jeweils unabhängig voneinander ansteuerbar sind. Damit ist es möglich, Trennschnitte in an sich beliebigen Abständen an einem durchlaufenden Werkstück zu setzen. Auf diese Weise können Fehlstellen gezielt herausgeschnitten werden, auch wenn sie eine vergleichsweise geringe Längserstreckung aufweisen. Der Abfall wird hierdurch auf die kleinstmögliche Menge reduziert.

Darüber hinaus bietet die Konzeption die Möglichkeit, Werkstücke optimal dadurch auszunutzen, dass Stücke unterschiedlicher Länge unmittelbar hintereinander geschnitten werden können. In Verbindung mit einer an sich bekannten nachgeschalteten Sortieranlage ist es möglich, die einzelnen Werkstücke optimal auszunutzen und den Verschnitt zu minimieren. Auch können Qualitätsstufen bei der Optimierung berücksichtigt werden, so dass insgesamt das Werkstück praktisch ohne Verschnitt vollständig verwertet werden kann.

Die unabhängige Ansteuerung beider Trenneinrichtungen ermöglicht die weitgehend freie Festlegung der Schnittfolgen. Anders als bei der bisher bekannten gattungsgemäßen Vorrichtung ist es nicht mehr zwingend, dass die Sägeblätter abwechselnd getaktet zum Einsatz kommen. Je nach Vorschubgeschwindigkeit und Abstand zweier Trennschnitte kann auch eine andere Abfolge gewählt werden.

Bevorzugt werden als Trennwerkzeuge Sägeblätter, insbesondere Kreissägeblätter, verwendet, da diese besonders kostengünstig sind.

Zum Erzeugen der Synchronisationsbewegung in Vorschubrichtung und/oder zur Durchführung der für den Trennvorgang erforderlichen Verstellung in Höhenrichtung werden von Vorteil Kurbeltriebe eingesetzt, die besonders effektiv eine präzise Umsetzung der Drehbewegung des Antriebs in eine Linearbewegung des Trennwerkzeugs ermöglichen. Alternativ zu den Kurbeltrieben sind auch Linearantriebe besonders geeignet, die Synchronisationsbewegung in Vorschubrichtung und/oder die Verstellung in Höhenrichtung auszuführen. Hierdurch lasst sich der Aufbau der Kappvorrichtung vereinfachen. Linearantriebe bieten auch bezüglich der Arbeitssicherheit Vorteile.

Im Vordergrund stünde bei Verwendung der Linearantriebe statt der Kurbeltriebe die zu gewinnende Flexibilität. So wird es durch den Einsatz eines Linearantriebs zur Höhenverstellung möglich, für das Eintauchen des Sägeblatts in das Werkstück eine niedrige Geschwindigkeit zu wählen und einen besonders sauberen Schnitt zu ermöglichen. Für den Austritt des Sägeblatts kann hingegen zur Optimierung der Produktionsgeschwindigkeit eine hohe Geschwindigkeit gewählt werden. Bei Einsatz eines Linearantriebs zur Verstellung in Förderrichtung kann beispielsweise die Geschwindigkeit für das Rückfahren der Sägeblätter nach einem Schnitt maximiert werden. Die kreuzweise kombinierten Linearantriebe für die Höhenverstellung und die Verstellung in Förderrichtung sind unabhängig voneinander ansteuerbar.

Gemäß einer bevorzugten Ausführungsform ist die Fördereinrichtung in Vorschubrichtung durchgehend ausgebildet. Erfindungsgemäß ist unterhalb der Trennwerkzeuge und mit diesen synchron verschiebbar ein Arbeitsraum vorgesehen, in den das Trennwerkzeug eintauchen kann. Auf diese Weise wird verhindert, dass das Trennwerkzeug die Fördereinrichtung beschädigt.

Als besonders ökonomisch wird eine Fördereinrichtung in Form eines in sich geschlossenen, umlaufenden Förderbands betrachtet.

In diesem Fall kann zur Ausbildung eines Arbeitsraums jeweils eine Umlenkeinrichtung für das Förderband vorgesehen sind, die synchron mit den Trennwerkzeugen verschiebbar ist.

Eine besonders einfach aufgebaute Umlenkeinrichtung lässt sich aus zwei Ablenktrommeln und einer unterhalb angeordneten Umlenktrommel aufbauen. Das Förderband wird an der ersten Ablenktrommel nach unten zur Umlenktrommel und von dort wieder zurück zur zweiten Ablenktrommel geführt. Auf diese Weise entsteht ein Eintauchbereich für das Trennwerkzeug, der hinsichtlich seiner Tiefe so bemessen ist, dass das Trennwerkzeug bei maximaler Eintauchtiefe einen ausreichenden Sicherheitsabstand zu dem Förderband aufweist.

Zusätzliche Vorteile bietet ein seitlich angeordnetes, umlaufendes Anlageband für das Werkstück, das synchron mit dem Förderband umläuft und damit die Werkstücke präzise beim Durchlaufen der Fördereinrichtung auch in seitlicher Richtung führt. Das Anlageband ist ebenso wie das Förderband mit Umlenkeinrichtungen versehen, die synchron mit den Trennwerkzeugen in bzw. entgegen der Vorschubrichtung verschiebbar sind.

Wiederum ist es von Vorteil, die Umlenkeinrichtungen für das Anlageband jeweils mit zwei Ablenktrommeln und einer seitlich zurückversetzt angeordneten Umlenktrommel auszubilden. Auf diese Weise ist sichergestellt, dass die Trennwerkzeuge auch in seitlicher Richtung ausreichend Abstand zu dem Anlageband haben, um dieses vor Beschädigungen zu schützen.

Die Steuereinrichtung kann je nach Anforderung optional mit verschiedenen Funktionen ausgestattet sein. Ein optimales Ergebnis lässt sich dann erzielen, wenn die Steuereinrichtung in der Lage ist, anhand von am Werkstück angebrachten Markierungen fehlerbehaftete Stellen und/oder Qualitätsabstufungen zu erkennen und hieraus für jedes Werkstück individuell eine optimale Abfolge von Trennschnitten festzulegen. Die Markierungen können hierbei von Hand angebracht sein, auch ist es möglich, diese automatisiert von einer Bilderkennungseinrichtung anbringen zu lassen. Die Bilderkennungseinrichtung kann jedoch auch die ermittelten Informationen unmittelbar der Steuereinrichtung zuführen, ohne entsprechende Markierungen auf dem Werkstück anzubringen. Eine auf diese Weise optimierte Steuereinrichtung ermöglicht es, den Abfall minimal zu halten und die Ausbeute auch unter Berücksichtigung von Qualitätsabstufungen und vorhandenen Zuschnittslisten zu optimieren.

Die Erfindung wird nachstehend anhand eines in den Figuren dargestellten Ausführungsbeispiels näher erläutert. Es zeigen:
- Figur 1: Kappvorrichtung (Variante mit Kurbeltrieben) in perspektivischer Ansicht,
- Figur 2: Teilansicht von vorne,
- Figur 3: Fördereinrichtung in perspektivischer Ansicht,
- Figur 4: Kappvorrichtung (Variante mit Linearantrieben) in perspektivischer Ansicht.

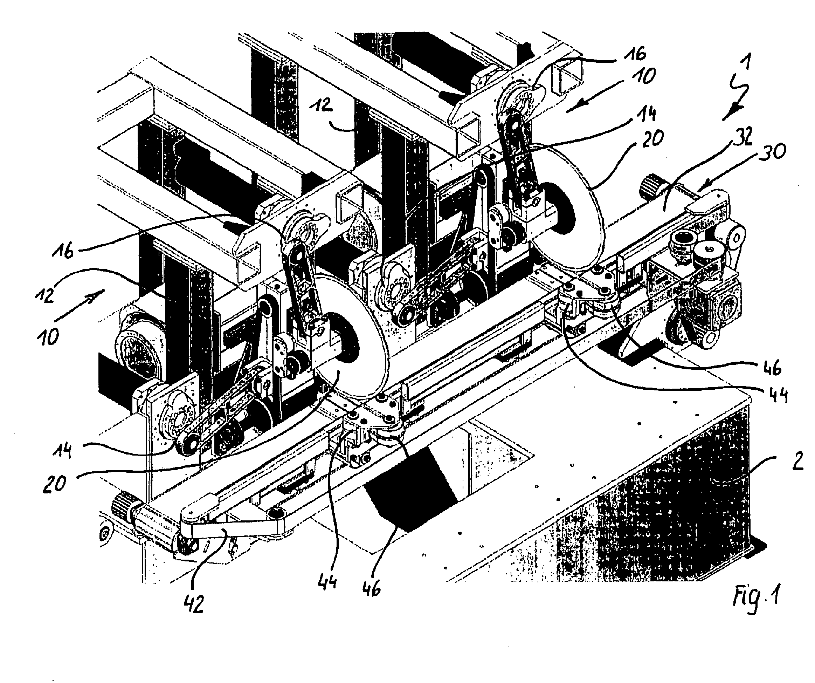

Figur 1 zeigt den grundsätzlichen Aufbau der Kappvorrichtung 1 mit einem Maschinengestell 2, welches im Wesentlichen zwei Trenneinrichtungen 10 und eine Fördereinrichtung 30 trägt.

Die beiden Trenneinrichtungen 10 sind unmittelbar benachbart zueinander angeordnet und im Wesentlichen identisch aufgebaut. Sie besitzen jeweils einen Maschinenständer 12, an denen Kurbeltriebe 14, 16, angebracht sind, die eine horizontale und eine vertikale Bewegung eines Sägeblatts 20 ermöglichen.

Unterhalb der Sägeblätter 20 ist die Fördereinrichtung 30 angebracht. Sie weist ein Förderband 32 auf, das der Zuführung und dem Abtransport von hier nicht näher dargestellten Werkstücken dient.

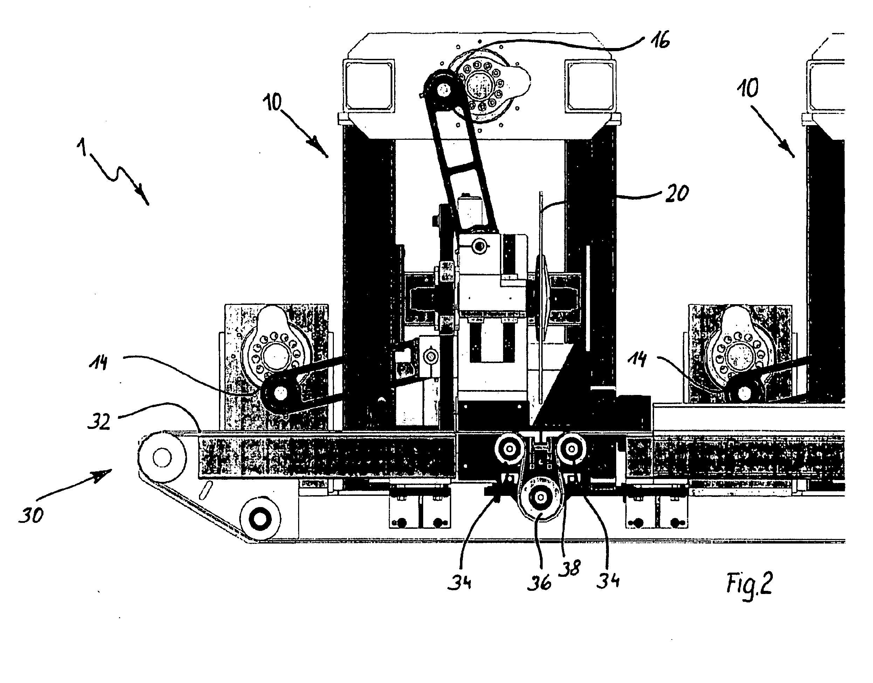

Wie sich beispielsweise aus Figur 2 ergibt, ist unterhalb der Sägeblätter 20 und diesen exakt zugeordnet jeweils eine Umlenkeinrichtung, bestehend aus zwei Ablenktrommeln 34 und einer nach unten versetzt angeordneten Umlenktrommel 36 vorgesehen, wodurch das Förderband 32 nach unten abgelenkt und wieder zurückgeführt wird. Hierdurch entsteht ein Arbeitsraum 38, in den das Sägeblatt 20 eintauchen kann, ohne das Förderband 32 zu berühren.

Die Ablenktrommeln 34 und die Umlenktrommel 36 sind hierbei nicht ortsfest angebracht, sondern sie sind in horizontaler Richtung gemeinsam mit dem Sägeblatt 20 über den Kurbeltrieb 14 verschiebbar gelagert.

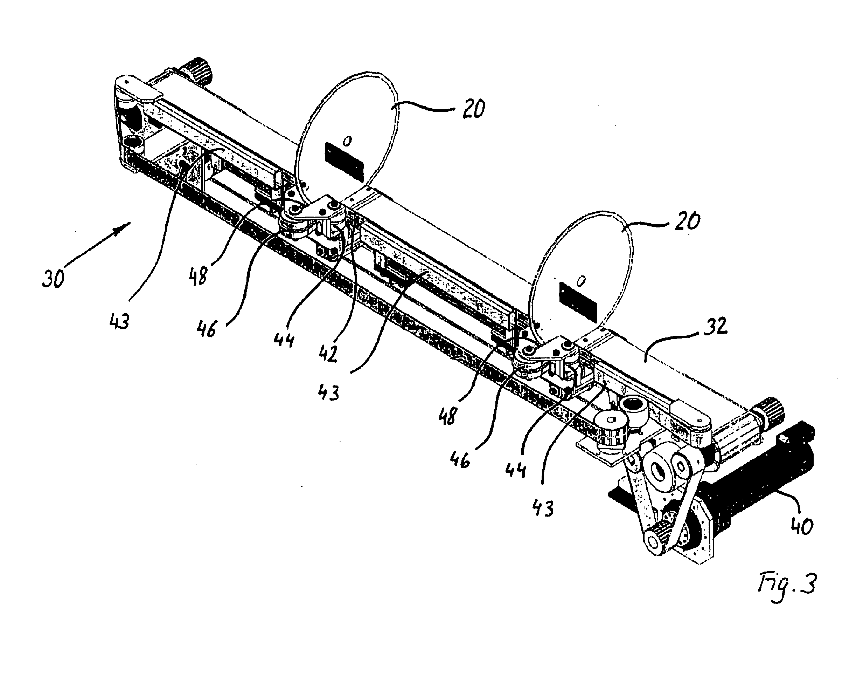

Die Bedeutung des Arbeitsraums 38 erschließt sich auch aus Figur 3, bei der in vereinfachter Darstellung die beiden Sägeblätter 20 in einer Schnittposition dargestellt sind, in der diese in den Bereich des Förderbandes 32 eingetaucht sind.

Darüber hinaus ergibt sich aus Figur 3 die Anordnung eines Anlagebandes 42, das seitlich und senkrecht zum Förderband 32 verlaufend angebracht ist. Wiederum sind im Bereich der Sägeblätter 20 jeweils zwei Ablenktrommeln 44 und eine Umlenktrommel 46 vorgesehen, sodass analog zum Arbeitsraum 38 ein Ausweichraum 48 entsteht. Das umlaufende Anlageband 42 wird an der ersten der beiden Ablenktrommeln 44 vom Bereich des Förderbandes 32 nach außen umgelenkt, anschließend außen um die Umlenktrommel 46 herumgeführt und abschließend über die zweite der beiden Ablenktrommeln 44 in die ursprüngliche Ebene zurückgelenkt.

Rückseitig wird das Ablenkband 42 an Stützleisten 43 entlang geführt.

Ein zur Bearbeitung anstehendes, hier nicht näher dargestelltes Werkstück wird entsprechend den Darstellungen gemäß Figur 1 bis 3 von links zugeführt und von dem Förderband 32 durch die Kappvorrichtung 1 kontinuierlich hindurch befördert. Eine ebenfalls nicht näher dargestellte Steuereinrichtung ist in der Lage, anhand von am Werkstück angebrachten Markierungen oder auf sonstige Art und Weise erhaltenen Informationen Trennschnitte an festgelegten Stellen des Werkstücks auszuführen. Die Festlegung erfolgt für jedes Werkstück individuell in Abhängigkeit von vorher festgelegten Kriterien, wie beispielsweise Fehlerstellen oder Qualitätskriterien.

Für die Durchführung des Trennvorgangs werden jeweils die beiden Kurbeltriebe 14, 16 aktiviert. Der Kurbeltrieb 14 sorgt für eine Horizontalverschiebung des Sägeblatts 20 in der Weise, dass es während der Dauer des Trennvorgangs synchron mit dem Werkstück mitgeführt wird, also hinsichtlich der Längsausrichtung relativ in Bezug auf das Werkstück stillsteht.

Der Trennschnitt wird nun in der Weise ausgeführt, dass der Kurbeltrieb 16 aktiviert wird, wodurch das Sägeblatt 20 in vertikaler Richtung verfahren wird. Es versteht sich von selbst, dass der Synchronisation zwischen dem durchlaufenden Werkstück und dem Sägeblatt höchste Bedeutung zukommt, um ein Verkanten des Sägeblatts zu vermeiden. Die Parameter sind hierbei so zu wählen, dass der Trennvorgang innerhalb des durch den Kurbeltrieb 14 maximal möglichen Horizontalhubs abgeschlossen werden kann.

Da beide Trenneinrichtungen 10 unabhängig voneinander ansteuerbar sind, können die Abstände von Trennschnitten in Bezug auf das Werkstück in weiten Grenzen frei gewählt werden, ohne dass das durchlaufende Werkstück angehalten werden muss. Selbst kleinste Längsabschnitte, beispielsweise im Bereich von Astlöchern, können auf diese Weise herausgetrennt werden, wodurch der Abfall minimiert und die Ausbeute des Werkstücks maximiert werden kann.

Ausgehend von dem vorstehend beschriebenen Prinzip können in der konkreten Ausgestaltung der Komponenten auch andere Wege eingeschlagen werden. Beispielsweise ist es möglich, als Trennwerkzeuge auch Stich- oder Bandsägeblätter einzusetzen, ebenso kann der Trennvorgang durch Wasserstrahl oder Laser erfolgen.

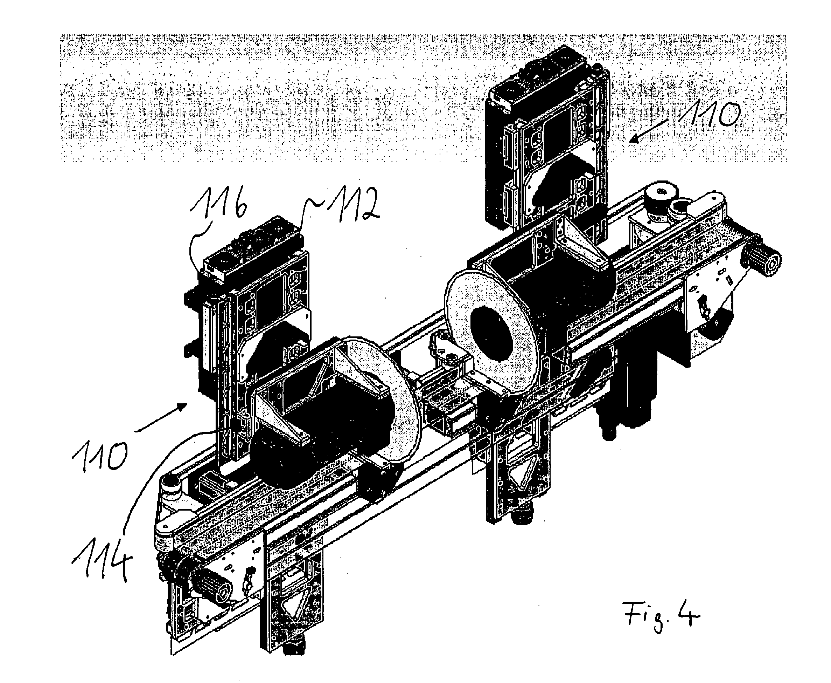

Figur 4 zeigt vergleichbar mit der perspektivischen Darstellung in Figur 1 eine alternative Variante der Kappvorrichtung 1, wobei im Unterschied statt Kurbeltrieben 14, 16 Linearantriebe 114, 116 verwendet sind. Die beiden Trenneinrichtungen 110 sind wie in Figur 1 auch unmittelbar benachbart zueinander angeordnet und im Wesentlichen identisch aufgebaut. Sie besitzen jeweils einen Maschinenständer 112, an denen Linearantriebe 114, 116, angebracht sind, die eine horizontale und eine vertikale Bewegung eines Sägeblatts 20 ermöglichen.

### Bezugszeichenliste

- 1: Kappvorrichtung
- 2: Maschinengestell

- 10, 110: Trenneinrichtung
- 12, 112: Maschinenständer
- 14: Kurbeltrieb
- 16: Kurbeltrieb

- 20: Sägeblatt

- 30: Fördereinrichtung
- 32: Förderband
- 34: Ablenktrommel
- 36: Umlenktrommel
- 38: Arbeitsraum

- 40: Antriebsmotor
- 42: Anlageband
- 43: Stützleiste
- 44: Ablenktrommel
- 46: Umlenktrommel
- 48: Ausweichraum

- 114: Linearantrieb
- 116: Linearantrieb

## Patentansprüche

1. Kappvorrichtung (1) mit
- einer Fördereinrichtung (30) zum Zuführen eines Werkstücks in einer Vorschubrichtung,
- wenigstens zwei mit einem Trennwerkzeug (20) versehenen Trenneinrichtungen (10) zum Abtrennen von Längsabschnitten aus dem Werkstück, die jeweils unabhängig voneinander ansteuerbar sind, und
- einer Steuereinrichtung zum Ansteuern der Trenneinrichtungen (10) derart, dass das jeweilige Trennwerkzeug (20) ausgehend von einer Ausgangsposition zumindest für die Dauer des Abtrennvorgangs synchron mit dem zugeführten Werkstück in Vorschubrichtung mitgeführt wird, dabei den Trennschnitt ausführt und anschließend entgegen der Vorschubrichtung in die Ausgangsposition zurückgeführt wird,
**dadurch gekennzeichnet, dass** im Bereich der Fördereinrichtung (30) unterhalb des jeweiligen Trennwerkzeugs (20) und mit diesem synchron in bzw. entgegen der Vorschubrichtung verschiebbar ein Arbeitsraum (38) gebildet ist, in den das jeweilige Trennwerkzeug (20) eintauchen kann.

2. Kappvorrichtung nach Anspruch 1,
**dadurch gekennzeichnet, dass** die Trennwerkzeuge (20) Sägeblätter, insbesondere Kreissägeblätter, sind.

3. Kappvorrichtung nach Anspruch 1 oder 2,
**dadurch gekennzeichnet, dass** die Trenneinrichtungen (10) Kurbeltriebe (14, 16) oder Linearantriebe (114, 116) aufweisen, mit denen die Trennwerkzeuge (20) in bzw. entgegen der Vorschubrichtung und/oder in Höhenrichtung verschiebbar angelenkt sind.

4. Kappvorrichtung nach einem der vorhergehenden Ansprüche,
**dadurch gekennzeichnet, dass** die Fördereinrichtung (30) ein in sich geschlossenes, umlaufendes Förderband (32) aufweist.

5. Kappvorrichtung nach einem der vorangehenden Ansprüche,
**dadurch gekennzeichnet, dass** zur Bildung des Arbeitsraums (38) eine mit dem Trennwerkzeug (20) synchron verschiebbare Umlenkeinrichtung (34, 36) für das Förderband vorgesehen ist.

6. Kappvorrichtung nach Anspruch 5,
**dadurch gekennzeichnet, dass** die Umlenkeinrichtung (34, 36) zwei Ablenktrommeln (34) und eine unterhalb angeordnete Umlenktrommel (36) aufweist.

7. Kappvorrichtung nach einem der vorangehenden Ansprüche,
**dadurch gekennzeichnet, dass** die Fördereinrichtung (30) ein umlaufendes Anlageband (42) für das Werkstück aufweist, das seitlich und senkrecht zum Förderband (32) verlaufend angeordnet ist und zwei mit den Trennwerkzeugen (20) synchron verschiebbare Umlenkeinrichtungen (44, 46) besitzt.

8. Kappvorrichtung nach Anspruch 7,
**dadurch gekennzeichnet, dass** die Umlenkeinrichtung (44, 46) jeweils zwei Ablenktrommeln (44) und eine seitlich zurückversetzte Umlenktrommel (46) aufweist.

9. Kappvorrichtung nach einem der vorhergehenden Ansprüche,
**dadurch gekennzeichnet, dass** die Steuereinrichtung in der Lage ist, anhand von am Werkstück angebrachten Markierungen oder von mittels einer Bilderkennungseinrichtung erhaltenen Informationen fehlerbehaftete Stellen und/oder Qualitätsabstufungen zu erkennen und hieraus für jedes Werkstück individuell eine Anordnung von Trennschnitten zu ermitteln, bei der der Abfall minimiert und die Ausbeute, gegebenenfalls unter Berücksichtigung der Qualitätsabstufungen, optimiert wird.

## Claims

1. A trimming apparatus (1) with
- a conveying device (30) for supplying a workpiece in an advancing direction,
- at least two separating devices (10) provided with a separating tool (20) for the separation of longitudinal portions from the workpiece, which are capable of being actuated in each case independently of each other, and
- a control device for actuating the separating devices (10) in such a way that starting from a starting position the respective separating tool (20) is jointly conveyed in synchronism with the supplied workpiece in the advancing direction at least for the duration of the separating procedure, performs the separating cut during this and is then brought back into the starting position contrary to the advancing direction,
**characterized in that** an operating space (38), into which the respective separating tool (20) can dip, is formed in the region of the conveying device (30) below the respective separating tool (20) and so as to be displaceable in synchronism therewith in or contrary to the advancing direction.

2. A trimming apparatus according to claim 1, **characterized in that** the separating tools (20) are saw blades, in particular circular saw blades.

3. A trimming apparatus according to claim 1 or 2, **characterized in that** the separating devices (10) have crank drives (14, 16) or linear drives (114, 116) by which the separating tools (20) are articulated so as to be displaceable in or contrary to the advancing direction and/or in the vertical direction.

4. A trimming apparatus according to any one of the preceding claims, **characterized in that** the conveying device (30) has a closed, circulating conveyor belt (32).

5. A trimming apparatus according to any one of the preceding claims, **characterized in that** in order to form the operating space (38) a reversing device (34, 36) displaceable in synchronism with the separating tool (20) is provided for the conveyor belt.

6. A trimming apparatus according to claim 5, **characterized in that** the reversing device (34, 36) has two deflecting drums (34) and one reversing drum (36) situated below.

7. A trimming apparatus according to any one of the preceding claims, **characterized in that** the conveying device (30) has a circulating arrangement belt (42) for the workpiece, which is arranged so as to extend laterally and at a right angle to the conveyor belt (32) and has two reversing devices (44, 46) displaceable in synchronism with the separating tools (20).

8. A trimming apparatus according to claim 7, **characterized in that** the reversing device (44, 46) has in each case two deflecting drums (44) and one reversing drum (46) set back laterally.

9. A trimming apparatus according to any one of the preceding claims, **characterized in that** the control device is capable of detecting, with reference to markings applied to the workpiece or information obtained by means of an image detection device, faulty locations and/or quality levels and of determining from these individually for each workpiece an arrangement of separating cuts in which the waste is minimized and the yield is optimized, optionally whilst taking into consideration the quality levels.

## Revendications

1. Dispositif d'écrétage (1) comprenant :
- une installation de transfert (30) pour fournir une pièce dans une direction d'avancée,
- au moins deux installations de coupe (10) munies d'outils de coupe (20) pour couper des segments longitudinaux de la pièce, et qui sont commandés indépendamment l'un de l'autre, et
- une installation de commande pour commander une installation de coupe (10) de façon que son outil de coupe (20), partant d'une position de sortie, soit entraîné au moins pendant la durée de l'opération de coupe, en synchronisme avec la pièce fournie, dans le sens de l'avancée, pour effectuer la coupe et ensuite revenir en position de sortie dans la direction opposée à la direction d'avancée,
dispositif **caractérisé en ce que**
dans la zone de l'installation de transfert (30) en dessous de l'outil de coupe (20) respectif, il est formé un espace de travail (38) coulissant en synchronisme dans la direction d'avancée et dans la direction opposée à celle-ci, espace de travail dans lequel peut plonger chaque outil de coupe (20).

2. Dispositif d'écrêtage selon la revendication 1,
**caractérisé en ce que**
les outils de coupe sont des lames de scie, notamment des disques de scie.

3. Dispositif d'écrêtage selon la revendication 1 ou 2,
**caractérisé en ce que**
les installations de coupe (10) ont des transmissions à manivelle (14, 16) ou des entrainements linéaires (114, 116) qui déplacent les outils de coupe (20) dans la direction d'avancée ou dans la direction opposée et/ou de façon coulissante en hauteur.

4. Dispositif d'écrêtage selon l'une des revendications précédentes,
**caractérisé en ce que**
l'installation de transfert (30) comporte une bande transporteuse (32) sans fin.

5. Dispositif d'écrêtage selon l'une des revendications précédentes,
**caractérisé en ce qu'**
une installation de déviation (34, 36) de la bande transporteuse est prévue pour coulisser en synchronisme avec l'outil de coupe (20) et former l'espace de travail (38).

6. Dispositif d'écrêtage selon la revendication 5,
**caractérisé en ce que**
l'installation de déviation (34, 36) comporte deux tambours de déviation (34) et un tambour de renvoi (36) en dessous de ceux-ci.

7. Dispositif d'écrêtage selon l'une des revendications précédentes,
**caractérisé en ce que**
l'installation de transfert (30) comporte une bande d'application (42), tournante, pour la pièce, et qui circule latéralement et perpendiculairement à la bande transporteuse (32) et comporte deux installations de déviation (44, 46) coulissant en synchronisme avec les outils de coupe (20).

8. Dispositif d'écrêtage selon la revendication 7,
**caractérisé en ce que**
l'installation de renvoi (44, 46) comporte respectivement deux tambours de déviation (44) et un tambour de renvoi (46) décalés latéralement.

9. Dispositif d'écrêtage selon l'une des revendications précédentes,
**caractérisé en ce que**
l'installation de commande est en mesure, à l'aide des marquages prévus sur la pièce, ou à l'aide d'informations reçues d'une installation de détection d'image, de reconnaître des zones défectueuses et/ou réduisant la qualité et de déterminer à partir de là, pour chaque pièce, individuellement, une disposition de coupe, minimisant les déchets et optimisant le rendement le cas échéant en tenant compte d'un classement qualitatif.
